# EUROPEAN PATENT APPLICATION

(11) **EP 1 987 870 A2**
(43) Date of publication of application: **05.11.2008**
(21) Application number: 08445019.6
(22) Date of filing: 02.05.2008
(51) Int. Cl.: B01D 41/04, B08B 5/02, B08B 15/04

(54) **Cleaning device for filters**

(30) Priority: 03.05.2007 SE 0701068; 29.05.2007 SE 0701293
(71) Applicant: Larsson, Magnus, 596 92 Skänninge (SE)
(72) Inventor: Larsson, Magnus, 596 92 Skänninge (SE)
(74) Representative: Berglund, Erik Wilhelm

(57) **Abstract**

Cleaning device for filter that includes, opposite each other located, a blowing orifice for air and a suction orifice for air with an intermediate distance that a allows the insertion of a filter (3) that is to be cleaned therebetween. The orifices are moveable in the height direction up and down. The filter (3) that is to be cleaned is put on a rotatable table (2) with the blowing orifice (5) on the inside and a suction box (6) or suction orifice on the outside of the filter. An eccentrically suspended ratchet (12) is arranged on the suction orifice and has such a length that it in the proximity of an end position for this up and down going movement is brought in contact with the table (2) coated with a rubber disc so that the table is turned together with the filter, a step at each movement forth and back.

## Description

In order to protect engines and machinery that use much air, for instance compressors and engines, filters are used in order to filter away, as far as possible, airborne pollutions, since these pollutions otherwise result in a severe wear of the engine or machinery, unnecessarily shortening the life span of this. For motors and machinery that are used in very dusty environments, as agriculture, gravel pits, quarries, construction works, mines etc very large filters must be used since it is a question of very large machines and the filters have to be exchanged often since they are quickly clogged and then function as a restriction for the machine impairing its efficiency and economy. The fitter cost may thus in such environments be very considerable. In order to reduce the filter costs it is known to try in different ways to blow the filters clean by pushing air trough the filters in the direction opposite the one present when the filters are used. The most usual is that one simply with a jet for pressurized air try to blow through the filter. this however rarely result in satisfactorily clean filter and often result in a dusty environment for the person trying to clean the filter. Furthermore there is the risk that the filter breaks. Also facilities for the cleaning of filters are known, but the uses of such facilities is comparatively limited presumably partly due to high costs, partly due to unsatisfactory cleaning.

The object of the invention is to remedy the above problem and achieve an as to cost and quality efficient filter cleaning and thereby an efficient filter use, that furthermore constitute a gain for the environment.

The above problem is in accordance with the invention solved in accordance with claim 1.

In order to efficiently loosen particles that have become stuck in a filter it is not sufficient only to vacuum clean the air inlet side of the filter (at filtering) simultaneous with a supply of air on the other side of the filter (back flushing), some particles will still remain stuck in the filter. In order to free these stuck particles it is in accordance with the invention suggested that the inlet side of the filter is subjected to a forceful air stream directed against the inlet side of the filter. When these stuck particles have been loosened from the filter the back flushing can transport the particles out of the filter. Advantageously this air stream is achieved with a jet or several on the inlet side of the filter (at use) arranged proximate to the back flushing means (outlet jet and suction box) and in particular inside the suction box itself so that particles that have become free directly can be transported out of the filter. In this way also particles, that when they have entered into the filter have moved laterally before they get stuck, can be made free.

In reality it is only possible to work a very limited part of the filter area at a time and furthermore each part of the area need to be treated with air flow on the inlet side in several different directions before it is ready.

The feeding technic i accordance with the invention achieve this by ascertaining that the cleaning means is (air jets and suction box) all the time following new work paths over the area of the filter. This is achieved by the step for the feed of the filter in relation to cleaning means not being exact. This result in the slightly random feeding at the invention and cause the cleaning jets to pass each part area of the filter when the cleaning has gone on for some time and this also means that each part of the area will be swept past by the jets along different paths so that each little surface part will be subjected to back flushing in all directions in the plane of the filter material so that a cleaning that is as good as possible is achieved. Since the degree of cleaning os improved by the random feeding of the cleaning jets over the area of the filter the need of size for the air streams is reduced and it is possible to do with a smaller air stream and consequently less costly installations.

Further advantages and characteristics of the invention as well as further developments of this are apparent from the subclaims and following description of a preferred embodiment of the invention respectively with reference to the enclosed drawings, where fig 1 shows a device in accordance with the invention in its entirety, fig 2 a detail of the device and fig 3 a device completed for filters with axial filtering.

The device depicted in the drawing includes a rotatable table 2. On the table is placed a cylindrical filter 3 that is to be cleaned. A tube 4 can be inserted down into the filter and is enclosed to a pressurized air source. The tube 4 has in its lower end a jet 5 directed out towards the inside surface of the filter. On the outside of the filter a suction box 6 is arranged opposite the outlet of pressurized air through the jet 5. The suction box 6 is connected to a vacuum cleaner or similar device, advantageously an industrial vacuum cleaner. The tube for feeding pressurized air inside the filter and the suction box 6 on the outside are fastened in a vertically moveable part 7. The movement up and down is propelled by an air- or hydraulic cylinder provided with valves that switch the driving direction in the end positions, the upper end position being with a corresponding adjustment means 11 adjustable after the filter height. When a filter that is to be cleaned is to be put in place or removed the jets for pressured air and vacuum box are lifted up so that the working area becomes free for insertion or removal. At cleaning the jets and suction box are by means of the cylinder moved up and down along the filter in order to remove as much dust as possible with simultaneous blowing and vacuuming.

In order to turn the filter supporting table 2 during the cleaning process on the vacuum suction part a slightly eccentrically supported ratchet is supported, that in its lower end is provided with a tip. When the piston and pressurized air jets and suction box come close to its lower turning positions the ratchet with its downwards facing tip will come in contact with the rotatable, filter supporting table and during the final phase of the movement downwards of the piston the ratchet will turn the table a distance. Advantageously the ratchet is supported with a comparatively wide play. Since it in reality is practically impossible achieve an exact uniform feed at each piston stroke with the above feeding of the filter supporting table, in reality the feeding will never give a precise whole turn but instead it is certain that the cleaning device after a number of revolutions have treated the entire area of the filter. Instead of an eccentric support one can consider the ratchet to be provided with a stop that secure that it is always inclined somewhat toward one side, this to ascertain that the feed the entire time is in the same direction. As is realized the described drive is not only low cost but also very reliable.

The drive can also be adopted for flat filters by exchanging the rotatable table for a linearly moveable table and a ratchet that can be inclined in two opposite directions alternatively two hacker that can work alternatingly for feeding back and forth and suitable switching means.

At filter cleaning advantageously the above described device is driven in such a way that at first no air is provided to the blow cleaning jet on the outside arranged inside the suction box.

When the filter has rotated a number of revolutions with the repeated movement up and down during the back flushing of the filter all loose, and particular on the surface sitting dust has been removed. The blow cleaning then continue but now also with a feeding of pressurized air to the jet 8 for this arranged on the outside in the suction area of the suction box, which jet deliver a jet of pressurized air directed against the filter surface or obliquely towards this. This jet of pressurized air is intended to blow away more ridgedly or in the depth sitting particles and also provide local vibrations in the filter material that facilitate the freeing of stuck dust particles. The jets then pass up and down in the same way that initially and in the final end a very clean filter is obtained that thus can be reused a number of times before it is worn out.

Alternatively one can consider to provide pressurized air to the jet for pressurized air with pressurized air on the outside already at the inlet of the cleaning process, here however one runs the risk of blowing dust particles sitting on the surface into the filter where they can get stuck.

The suction box is preferably along its edges provided with sealing brushes that further can brush parts of the filter surface and give small vibrations that can bring particles to loosen. Also the fact that the sub pressure in the suction box can bend the filter somewhat outward may work in a particle loosening direction. With a large suction box it is however preferable to provide the suction box with in the suction area arranged supports for the filter so that the filter material is not bent outward to much and break.

The cleaning device for can for instance be kept working for a time chosen according experience or filter size et cetera, alteratively one can consider to measure the pressure drop between the feeding jet for pressurized air inside the filter and the pressure in the suction box on the outside so that the cleaning is stopped when the filter is judged to be cleaned.

The jet 8 on the outside of the filter is advantageously of the type that provide a conical jet and a good lateral transport of particles in the filter. Also the jet 5 can be of this type. The jet can for instance be arranged slightly below the level of the jet 5 and a little ahead of this in the turning direction.

In order for the ratchet to be able to drive the table around the ratchet is preferably pointed and the table provided with a rubber disc.

In order to enable cleaning of differently large filters it is not only the used stroke of the piston, that is its upper stop and turning position that is adjustable but also the suction box and the inner jet 5 for pressurized air have adjustment means 9 and 10 respectively for adjustment radially in relation to the table for adaption to filter diameter and thickness.

Since you normally at the places were machines are served, workshops, garages etcetera have access to pressurized air as well as vacuum cleaners or corresponding devices the installation need is limited to the invented device that thus can pay off very quickly.

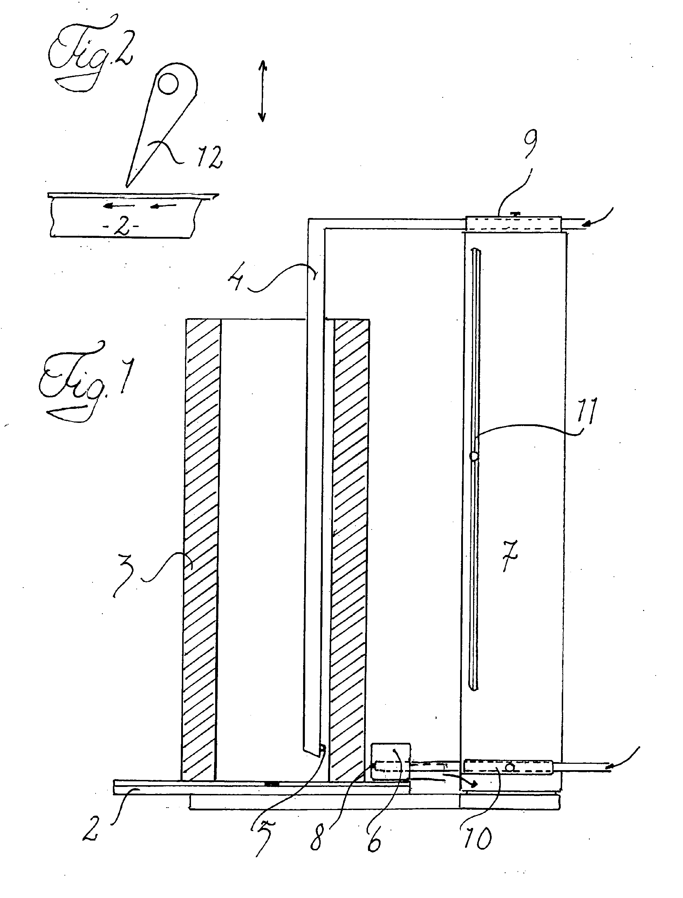

In fig 2 has schematically been shown an embodiment of the ratchet. Since the hole in the ratchet is eccentric the point will when the ratchet hangs freely be located to the side of a vertical line through the bearing. The table is turned from the moment when the ratchet get in contact with the table until its movement downwards is stopped. If so is desired the length of the step can be varied with the level of the bearing of the ratchet.

Instead of using an eccentric journalling of the ratchet one can with a stop cause the ratchet to hang eccentrically securing the movement of the table in one of the same direction. An adjustment of such a stop can be used to control the movement. With two alternating stops alternating directions of movement can be achieved.

The above described device according to the invention can also with comparatively small means be completed so that it can be used for cylindrical filters with an axial flow through. This is done by arranging the filter with suitable means being arranged rotatable with its axle of symmetry essentially horizontal. The drive movement that is obtained at each stroke of the jets up and down is transferred to means that rotate the filter. The ends of the filter are arranged so that they lie as close as possible to the movement paths of jet and suction box up and down. In this way the orifices will during the stepwise rotation of the filter the entire time move along the diameters or radii of the surfaces of both filter ends are of the filter in booth ends or somewhat parallely displaced in relation to this. The adjustment of the length of the stroke will not be particularly critic, it is sufficient with a stroke between the radius and the diameter for the entire filter area to be swept.

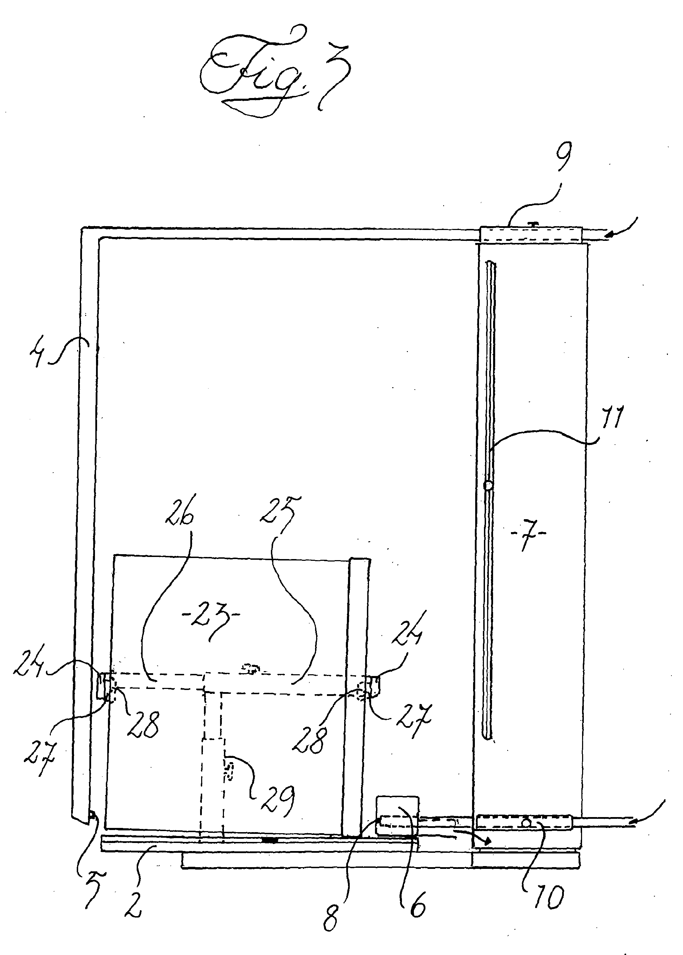

Fig 3 shows a device for the blow cleaning of cylindrical filters with axial flow throw. The filter 23 is circular and has a flow throw from end to end. In the middle of the ends there are depressions 28 in which protrusions 27 in the ends of arms 24 can grip in. The arms 24 are in the other end connected to two telescopicly arranged profiles 25, 26 that can be locked in their interrelated positions for an adaption to the filter length. The outer 25 of the profiles are via a telescopic profile device 29 fastened to the device and adjustable to its height position.

The profiles 24, 25 are slightly inclined, causing a filter gripped by the protrusions of the arms also to be inclined. By lowering the filter to contact with the table 2 this will when it is turned also turn the filter around when the orifices at blow cleaning move up and down together with the ratchet achieving the driving movement.

If the filter is provided with a bead in the end, or is provided with a surrounding elastic ring the filter can also be placed horizontally and parallel respectively with the table surface.

In relation to the first embodiment the jet that blow into the filter must be possible to place further away from the suction orifices. The turning positions of the orifices are advantageously adjusted so that they in the upper position turn at the edge of the filter, while the lower turning position can be placed in level with the center of the filter or lower down if so desired. In order to provide this the drive ratchet may be arranged adjustable in height and in relation to the orifices.

Also filters that are axial but non-circular can be handled with the above device, alternatively with the ratchet that is linearly going back and forth.

## Claims

1. Cleaning device for filter, **characterized in** comprising, turned against each other, an outlet jet (5) for air and a suction box (6) for air, with a distance between them that allows the insertion of a filter (3) that is to be cleaned there between, and that the jet (5) and the suction box are moveable in a first direction back and forth over a filter surface that is to be cleaned and that movement in second direction is by means of an eccentrically suspended ratchet (12) arranged on one of the back and forth going parts and that the ratchet has such a length that it in the proximity of an end position for this back and forth going movement is brought in contact with a part that is angled relative this movement direction, said part being connected with a filter that is to be cleaned, said part being in this way propelled a step forward at each movement back and forth for the jet (5) and the suction box (6).

2. Device according to claim 1, **characterized in that** the part that is driven by the ratchet is a rotatable table (2) on which a cylinder filter (3) can be placed.

3. Device according to claim 2, **characterized in that** the table (2) is covered with a rubber disc.

4. Device according to any of the preceding claims, **characterized in that** in or at the suction box (6) one or several jets (8) for pressurized air are arranged to blow one or several concentrated air jets against the filter surface.

5. Device according to claim 4, **characterized in that** the jets (8) for pressurized air or have a conical spreading.

6. Device according to any of the preceding claims, for cleaning of filter (23) with an axial flow through, **characterized in that** it includes means (24 - 29) to hold the filter rotatable around an axle of symmetry axle and with an end edge in contact with the turnable table (2) so that the filter is turned around during the blow cleaning.

7. Method for cleaning by means of a device in accordance with claim 4, **characterized in that** the filter is first cleaned only with back flushing and thereafter also with air jets against the inlet side of the filter at use.
